(19) Europäisches Patentamt
European Patent Office
Office européen des brevets

(11) EP 2 293 043 A2

(12) **EUROPEAN PATENT APPLICATION**

(43) Date of publication:
09.03.2011 Bulletin 2011/10

(51) Int Cl.:
*G01N 21/35* (2006.01)  *G01N 21/27* (2006.01)

(21) Application number: 10174273.2

(22) Date of filing: 27.08.2010

(84) Designated Contracting States:
AL AT BE BG CH CY CZ DE DK EE ES FI FR GB GR HR HU IE IS IT LI LT LU LV MC MK MT NL NO PL PT RO SE SI SK SM TR
Designated Extension States:
BA ME RS

(30) Priority: 28.08.2009  TW 098129012

(71) Applicant: Radiant Innovation Inc.
HsinChu (TW)

(72) Inventors:
• Tsao, Simon
Hsinchu City Taiwan (CN)
• Zang, Yang-Gang
Haidian District Beijing (CN)
• Gu, Ding-Jie
Kunshan City Jiangsu (CN)

(74) Representative: Dossmann, Gérard
Casalonga & Partners
Bayerstrasse 71-73
80335 München (DE)

(54) **Gas concentration measurement device and method thereof**

(57) The present invention discloses a gas concentration measurement device and a method thereof, which are used to measure the concentration of carbon dioxide, and wherein a single-channel infrared gas detection module is used to detect a voltage signal of a gas sample. A digital-to-analog converter converts the voltage signal into an infrared signal value. A processing module calibrates the infrared signal value with a reference infrared signal value to generate a concentration of the gas sample. The initial reference infrared signal value is the voltage value of the normal carbon dioxide concentration in the atmosphere. The processing module calibrates the voltage drift of the gas concentration measurement device with the reference infrared signal value. Thereby is promoted measurement accuracy.

Fig. 2

EP 2 293 043 A2

**Description**

The present invention relates to a gas concentration measurement device and a method thereof, particularly to a technology, which uses a virtual dual-channel infrared approach to calibrate voltage drift and measure carbon dioxide concentrations.

A research of ASHRAE (America Society of Heating, Refrigeration and Air Conditioning Engineers) shows that aeration is required when the carbon dioxide concentration exceeds 1000ppm. A statistic report indicates that the carbon dioxide concentration is normally over this value in 90% buildings. When a person inhales too much carbon dioxide, his brain is slowed down, and his reaction is blunted. Meanwhile, he will feel dozy and fatigued. Therefore, some buildings are equipped with gas sensors to detect the concentration of carbon dioxide.

Most of the commercially-available carbon dioxide sensors or analyzers adopt an NDIR (Non-Dispersive Infra-Red) method to detect carbon dioxide. The molecules of carbon dioxide absorb special wavelengths of infrared light, and the absorbency is proportional to the concentration of carbon dioxide. For example, carbon dioxide has the highest absorbability in the infrared light with a wavelength of 4.26μm. Such a characteristic is used to detect carbon dioxide. The conventional single-channel carbon dioxide detector comprises a gas sampling tube. An infrared source is arranged in one end of the gas sampling tube, and an infrared sensor is arranged in the other end. The carbon dioxide molecules inside the gas sampling tube absorb the radiant energy of the infrared light having a wavelength of 4.26μm. The relationship between the carbon dioxide concentration and the absorbency of infrared light can be learned from the Beer's law. Thus, the carbon dioxide concentration can be worked out from the infrared absorbency. However, long-term operation causes the aging of the single-channel carbon dioxide detector and the voltage drift thereof, and the voltage drift further induces measurement errors and incorrect results. A US patent No.5347474 disclosed a single-channel gas measurement method able to compensate for concentration drift, wherein a carbon dioxide monitor is self-calibrated in a quiescent period. In the quiescent period, the carbon dioxide concentration is within 300-500ppm. The carbon dioxide monitor is calibrated via fitting and extrapolating the previous data of the quiescent period. However, the prior art use the concentration value to do the compensate, it can only compensate one kind of drift at the same time, zero drift or span drift. And the prior art needs many data and complicated mathematical analysis. Further, the prior art is time-consuming and hard to effectively promote measurement accuracy.

A US patent No.6114700 disclosed a single-channel gas measurement device and a method thereof, which are an NDIR device and a method thereof, wherein a gas is sampled to detect the infrared absorbency thereof. In the prior art, parallel light sources having different temperature coefficients are arranged in one end of a sample tank to increase the temperature of the tube. An NDIR detector is arranged on another end of the sample tank to monitor the concentration of carbon dioxide. A controller is arranged in the servo loop to control the persistently output light. The prior art measures the concentration of carbon dioxide in an optical method. The prior art performs an NDIR gas analysis on the gas sample and undertakes temperature compensation and signal conversion to automatically detect gas concentrations. Then, the result is presented. However, the prior art has great errors in the low concentration range and the high concentration range because no nonlinear compensation circuit is installed in the device. Therefore, the prior art is only suitable to detect the gas in a specified concentration range.

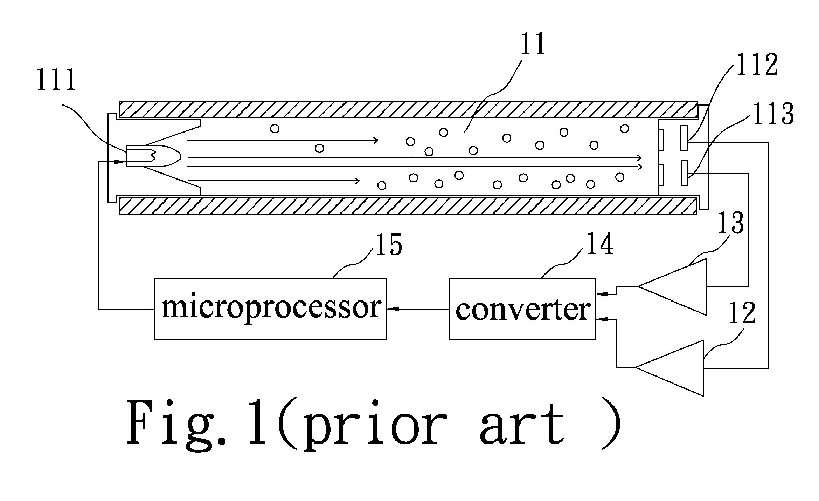

The typical approach to overcome the aging-induced voltage drift is to adopt a dual-channel gas detector. Refer to Fig.1 The conventional dual-channel gas concentration measurement device comprises a gas sampling tube 11. An infrared source 111 is arranged in one end of the gas sampling tube 11, and two infrared sensors 112 and 113 are arranged in the other end of the gas sampling tube 11. The two infrared sensors 112 and 113 are dual-channel thermopiles and respectively connected with two amplifiers 12 and 13. The two amplifiers 12 and 13 are connected with a converter 14. The infrared sensor 112 is a measurement channel. because there are some CO2 molecules in the tube 11, which will absorb the special infrared light(usually it's 4.26um) , the infrared sensor 112 receives above absorbed infrared light , thereof rising to generate a measurement voltage signal. The amplifier 12 receives and amplifies the measurement voltage signal. The converter 14 receives the amplified measurement voltage signal and converts the amplified measurement voltage signal into a digital infrared signal ,this infrared signal can be one voltage signal or counter signal ,but it's not gas concentration value yet. The infrared sensor 113 is a reference channel. The infrared sensor 113 receives the infrared light which is not absorbed by the CO2 molecules, so the infrared sensor 113 generates a reference voltage signal. The amplifier 13 receives the reference voltage signal and amplifies the reference voltage signal into an amplified reference voltage signal. The converter 14 receives the amplified reference voltage signal and converts the amplified reference voltage signal into a reference infrared signal, this reference infrared signal can be one voltage signal or digital signal, but it's not gas concentration value yet. The converter 14 is connected with a microprocessor 15. The microprocessor 15 calibrates the measurement signal with the reference infrared signal. Thereby, the infrared signal drift is corrected, and the carbon dioxide concentration is accurately measured. However, the abovementioned dual-channel thermopile device is a complicated optical-vacuum structure. Therefore, the prior art is expensive and unsuitable for homes, offices, etc.

Accordingly, the present invention proposes a gas concentration measurement device and a method thereof to effectively overcome the abovementioned problems.

The primary objective of the present invention is to provide a gas concentration measurement device and a method thereof, which adopts a simple single-channel infrared measurement structure, and which calibrates a measured infrared signal with a reference infrared signal, whereby is achieved a high precision gas concentration measurement, and whereby is overcome the problem that the conventional dual-channel infrared measurement structure has complicated structure and high cost.

Another objective of the present invention is to provide a gas concentration measurement device and a method thereof, which realizes a virtual dual-channel infrared scheme via adopting the voltage value obtained in a normal carbon dioxide concentration (400ppm) as the initial reference infrared signal value to compensate for the infrared signal drift caused by sensor aging, whereby is promoted the accuracy and reliability of measurement.

A further objective of the present invention is to provide a gas concentration measurement device and a method thereof, which can apply to homes, offices, schools, shops, etc., and which can measure a wide range of different gas concentration, whereby is attained a very high commercial potential.

To achieve the abovementioned objectives, the present invention proposes a gas concentration measurement device, which applies to measuring carbon dioxide concentrations, wherein an infrared beam, which is emitted by an infrared emitter of a single-channel infrared gas detection module, passes through the gas sample in a gas tube and reaches an infrared sensor. The infrared sensor generates a voltage signal corresponding to the concentration of the gas sample according to the detected infrared intensity. An amplifier amplifies the voltage signal into an amplified voltage signal and transmits the amplified voltage signal to a digital-to-analog converter. The digital-to-analog converter converts the amplified voltage signal into an infrared signal value and transmits the infrared signal value to a processing module. The processing module calibrates the infrared signal value with a reference infrared signal value and outputs a concentration value of the gas sample.

The present invention also proposes a gas concentration measurement method, which can compensate for infrared signal drift, and which comprises steps: presetting an initial reference infrared signal value corresponding to a normal concentration of the detected gas in the atmosphere; using a single-channel infrared gas detection module to obtain a voltage signal of the detected gas, converting the voltage signal into an infrared signal, calibrating the infrared signal value with the reference infrared signal value, and outputting a concentration value of the detected gas. The method of the present invention may further comprise steps: periodically or non-periodically updating the reference infrared signal value; and calibrating the infrared signal value with the updated reference infrared signal value and outputting a concentration of the detected gas.

Below, the embodiments are described in detail in cooperation with the attached drawings to make easily understood the objectives, technical contents, characteristics and accomplishments of the present invention.

Fig.1 is a diagram schematically showing a conventional dual-channel gas concentration measurement device;

Fig.2 is a diagram schematically showing a gas concentration measurement device according to the present invention;

Fig.3 is a flowchart of a gas concentration measurement method according to the present invention;

Fig.4 is a diagram showing the curves obtained via measuring the carbon dioxide concentration inside a building for many days before and after calibration;

Fig. 5 is a diagram showing the curves of the relationships between voltage value and the carbon dioxide concentration; and

Fig.6 is a diagram showing the curves of the concentration-error relationships of the prior arts and the present invention.

Below, the technical contents are described in detail in accompany with the drawings, wherein identical elements are designated with identical numerals.

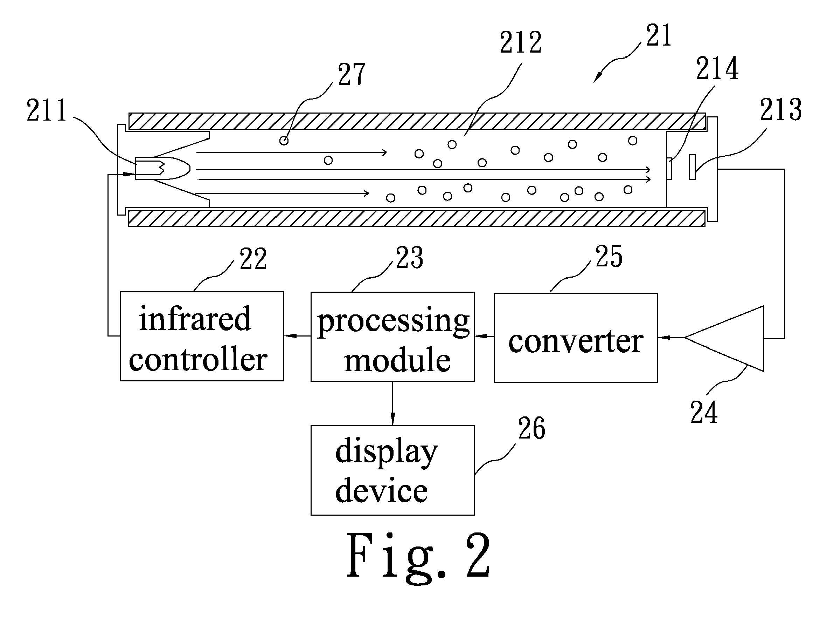

Refer to Fig.2 a diagram schematically showing a gas concentration measurement device according to the present invention. The present invention adopts a virtual dual-channel approach to measure the concentration of carbon dioxide. The device of the present invention comprises a single-channel infrared gas detection module 21 detecting the voltage signal of the carbon dioxide sample. The single-channel infrared gas detection module 21 includes an infrared emitter 211, a gas tube 212 and an infrared detector 213. The infrared detector 213 is a thermopile infrared sensor. One terminal of an infrared controller 22 is coupled to the infrared emitter 211, and another terminal of the infrared controller 22 is coupled to a processing module 23. The infrared controller 22 controls the infrared emitter 211 to emit infrared light. The infrared light passes through the carbon dioxide sample 27 contained in the gas tube 212 and reaches the infrared detector 213. The molecules of the carbon dioxide sample absorb the infrared light having a specified wavelength. The infrared detector 213 generates a voltage signal of the carbon dioxide sample 27 according to the detected intensity of the infrared light. A filter 214 is arranged in the single-channel infrared gas detection module 21. The filter 214 only allows a narrow infrared band that carbon dioxide can absorb to pass. Thereby, the infrared detector 213 is dedicated to detect carbon dioxide and generates the voltage signal of the carbon dioxide sample 27 according to the detected intensity of the narrow infrared band incident thereto. The infrared detector 213 is coupled to an amplifier 24. The amplifier 24 amplifies the voltage signal into an amplified voltage signal and transmits the amplified voltage signal to a converter 25. The converter 25 is a digital-to-analog converter converting the amplified voltage signal into a voltage value (or other infrared signal value which is not CO2 concentration still) and transmits the voltage value to a processing module 23. The processing module 23 calibrates the infrared signal value with a reference infrared signal value according to Equation (1):

$$V_{seAcor} = V_{seA} * (V_{seBold} / V_{seBnew}) \quad \dots\dots\dots\dots(1)$$

wherein $V_{seAcor}$ is the calibrated infrared signal value, $V_{seA}$ the detected infrared signal value of the carbon dioxide sample 27, $V_{seBold}$ the reference infrared signal value, and $V_{seBnew}$ the updated reference infrared signal value, whereby is calibrated the concentration drift caused by long-term usage and generated a correct concentration of the carbon dioxide sample 27. A display device 26 is coupled to the processing module 23 and presents the concentration. Thus, the present invention uses a simple single-channel infrared measurement structure to realize a high-precision virtual dual-channel gas measurement.

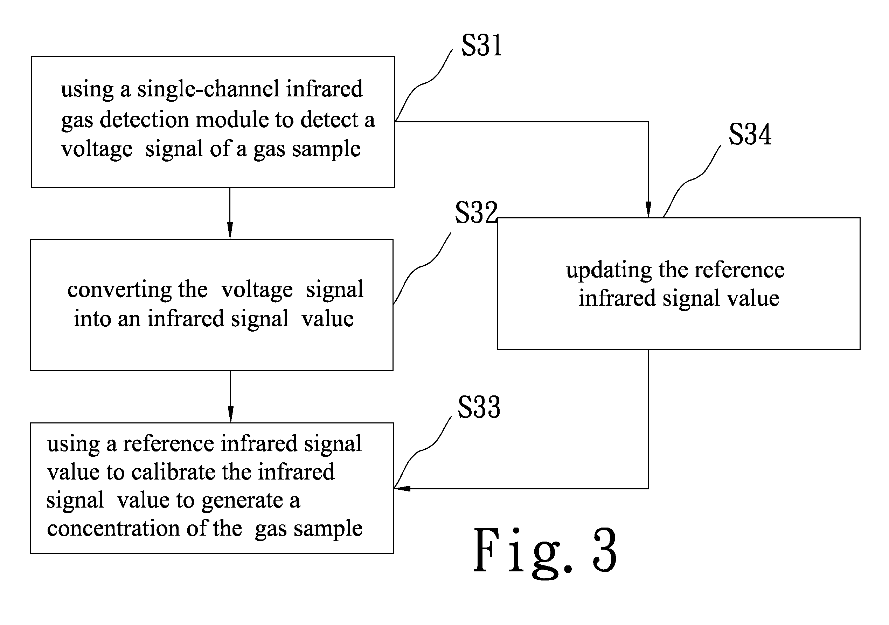

The atmosphere has about 350 ppm to 450 ppm carbon dioxide, which is the concentration most suitable for human beings naturally. In the present invention, an initial reference digital value is preset before a gas sample is measured. The initial reference digital value is obtained via measuring the gas concentration in the atmosphere. Refer to Fig.3 a flowchart of a gas concentration measurement method able to compensate for infrared signal drift according to the present invention. If a gas inside a building is to be detected in daytime, Step S31 is undertaken. In Step S31, the single-channel infrared gas detection module 21 is used to measure the voltage signal of the gas sample. Inside the building, the concentration of carbon dioxide increases with the personnel and the activities thereof. When the carbon dioxide concentration increases, for example, from 400 ppm to 1000 ppm, the detected voltage signal is weakened. In Step S32, the voltage signal is converted into an infrared signal value. In Step S33, the infrared signal value is calibrated with the reference infrared signal values to generate the concentration of the gas sample. Repeating the measurement and calibration of from Step S31 to Step S33 can promote the correctness of gas concentration measurement. Long-term usage will cause aging and infrared signal drift of the single-channel infrared gas detection module 21. Therefore, the reference infrared signal value should be updated periodically or non-periodically (Step S34). At night, the personnel and the activities inside a building decrease. Therefore, the carbon dioxide concentration inside the building also decreases, for example, from 1000ppm to 400 ppm or less, and approximates the carbon dioxide concentration of the atmosphere. Thus, the update is preferably undertaken at night. For updating the reference infrared signal value, the single-channel infrared gas detection module 21 is used to detect the voltage value of carbon dioxide concentration at night according to Step S31. Then, the detected voltage value directly replaces the reference infrared signal value used in Step S33. Thus, the updated reference infrared signal value is used to calibrate the drifted infrared signal value into the correct infrared signal value.

Another method to update this reference infrared signal value is to use one standard CO2 gas by pumping into the gas tube. In this way, the pumped standard CO2 can be any value in the range of 0ppm~3000ppm, and the preset reference infrared signal need be set according to this future pumped CO2 gas.

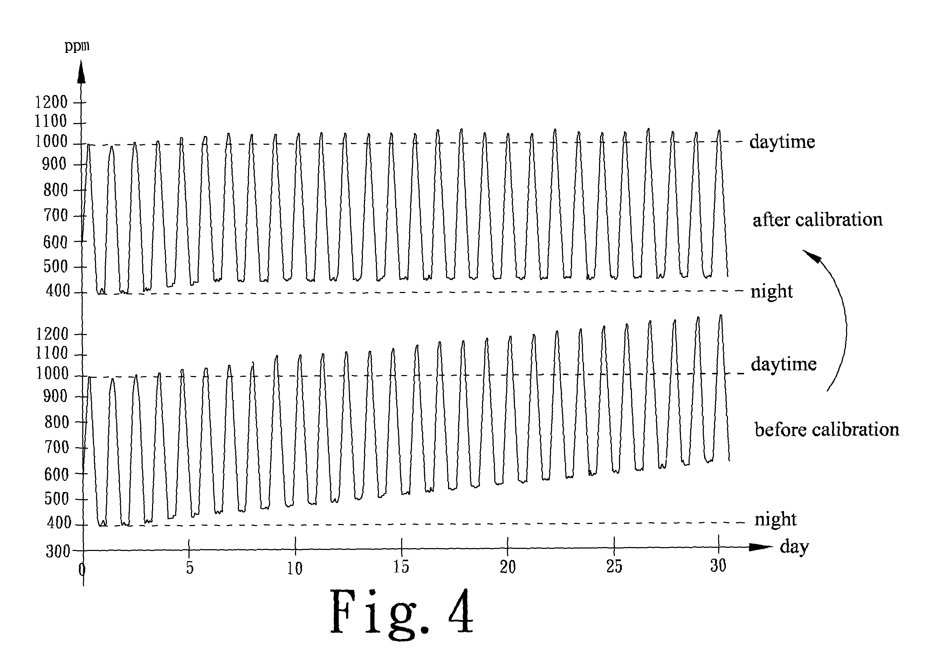

Refer to Fig.4 for the curves obtained via measuring the carbon dioxide concentration inside a building for many days before and after calibration. From Fig.4, it is known that periodically or non-periodically updating the reference voltage value can effectively correct the drifted infrared signal value.

Refer to Table.1 to further understand how the virtual dual-channel gas concentration measurement device of the present invention uses Equation (1) to calibrate the infrared signal drift caused by long-term usage and achieve the precision of a dual-channel infrared gas concentration measurement device.

Table. 1

| Symbol | Vse | Vseg | Vsez | Vsegz | Vsegz V2Ch | Cnt0 | CntAA | CntSh | CntSp | Cnt2Ch | CntV2Ch |
|---|---|---|---|---|---|---|---|---|---|---|---|
| Cnt True [ppm] | Vse [mV] | Vse after aging [mV] | Vsez Normalized | Vsez After aging | Vsez after aging cor.by V2Ch | Cnt before aging | Cnt after aging no cor. | Cnt cor. by shift | Cnt cor. by span | Cnt cor. by 2Ch | Cnt cor. by V2Ch |
| | | -1% aging | | -1% aging | -01% residual | Calc. from Equation07 | | 103 ppm shift | 113% | | -0.1% residual |
| 0 | 1.6908 | 1.6739 | 1.0000 | 0.9900 | 0.9990 | 0 | 46 | -56 | 41 | 0 | 2 |
| 400 | 1.6030 | 1.5870 | 0.9481 | 0.9386 | 0.9471 | 400 | 503 | 400 | 443 | 400 | 410 |
| 1000 | 1.5204 | 1.5052 | 0.8992 | 0.8902 | 0.8983 | 1009 | 1144 | 1041 | 1009 | 1009 | 1023 |
| 2000 | 1.4207 | 1.4065 | 0.8403 | 0.8319 | 0.8994 | 2038 | 2215 | 2113 | 1955 | 2038 | 2055 |
| 3000 | 1.3499 | 1.3364 | 0.7984 | 0.7904 | 0.7996 | 3020 | 3237 | 3135 | 2856 | 3020 | 3041 |
| 4000 | 1.2986 | 1.2856 | 0.7680 | 0.7604 | 0.7673 | 3910 | 4166 | 4063 | 3676 | 3910 | 3935 |
| 6000 | 1.2099 | 1.1978 | 0.7156 | 0.7084 | 0.7148 | 5991 | 6349 | 6247 | 5605 | 5991 | 6025 |
| 8000 | 1.1490 | 1.1375 | 0.6796 | 0.6728 | 0.6789 | 8073 | 8562 | 8459 | 7554 | 8073 | 8120 |

Table.1 shows the data obtained in simulated measurements performed by the present invention and the prior arts, wherein the carbon dioxide concentration (Symbol) ranges from 0ppm to 8000 ppm and the initial voltage ($V_{se}$) ranges from 1.6908mV to 1.1490mV. There are several prior arts used to perform calibration for the uncalibrated measured carbon dioxide concentration (Cnt AA). For examples, a single-channel carbon dioxide concentration zero shift calibration method (Cnt Sh) subtracts 103 ppm from all the measured carbon dioxide concentrations (Cnt AA); a single-channel carbon dioxide concentration span calibration method (Cnt Sp) divides each of the measured carbon dioxide concentrations (Cnt AA) by 113%; and a dual-channel method (Cnt 2Ch) calibrates the measured carbon dioxide concentrations (Cnt AA) into the standard carbon dioxide concentrations (Cnt0). The virtual dual-channel gas concentration measurement method (Cnt V2Ch) of the present invention sets a reference voltage value to function as the reference voltage value of a virtual reference channel firstly and uses the reference voltage value to calibrate the detected voltage value. For example, 1.6030mV, the voltage value for the normal carbon dioxide concentration in the atmosphere (400 ppm), is set to be the initial reference voltage value. The initial reference voltage value may be used as $V_{seBold}$. As the single-channel infrared gas detection module 21 will have infrared signal drift after long-term usage, the user had better periodically or non-periodically perform measurement at night to obtain the voltage value of the gas sample (such as 1.5870mV) to replace the initial reference voltage value and function as $V_{seBnew}$. When the carbon dioxide concentration is 1000ppm in daytime, the initial voltage value should be 1.5204mV. Suppose that the voltage detected by the single-channel infrared gas detection module is 1.5052mV ($V_{seA}$).
According to Equation (1),

$$V_{seAcor} = 1.5052 * (1.6030/1.5870) = 1.5204mV$$

Thereby, the voltage value is calibrated to be 1.5024mV exactly equal to the initial voltage value. Therefore, the present invention can output the accurate concentration of carbon dioxide.

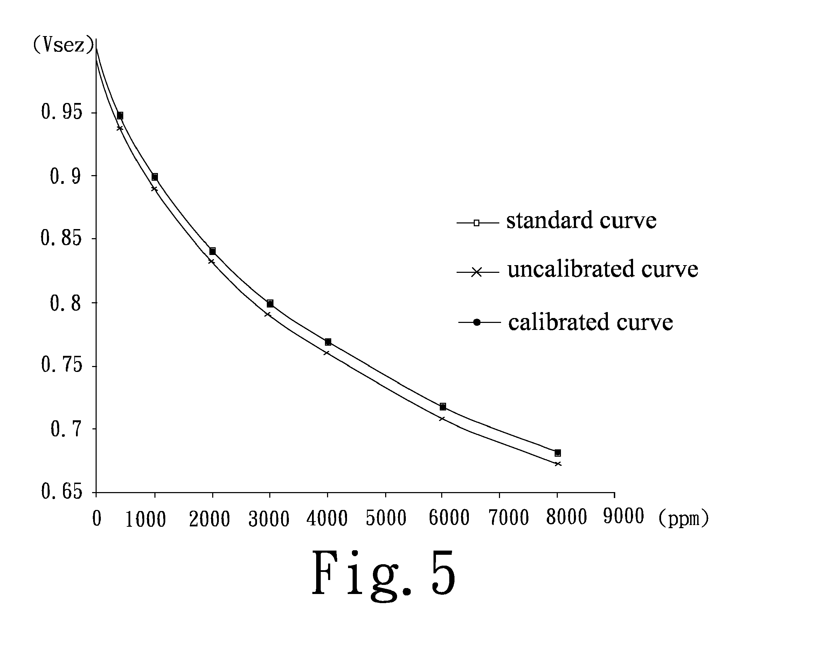

Refer to Fig. 5 for the curves expressing the relationships between voltage value and the carbon dioxide concentration, wherein the curve of the standard voltage value ($V_{sez}$) coincides with the curve of the calibrated voltage value. Although the single-channel infrared gas detection module used by the present invention is also aged by long-term usage and has an error of about 0.1%, the method of the present invention can almost perfectly correct the error.

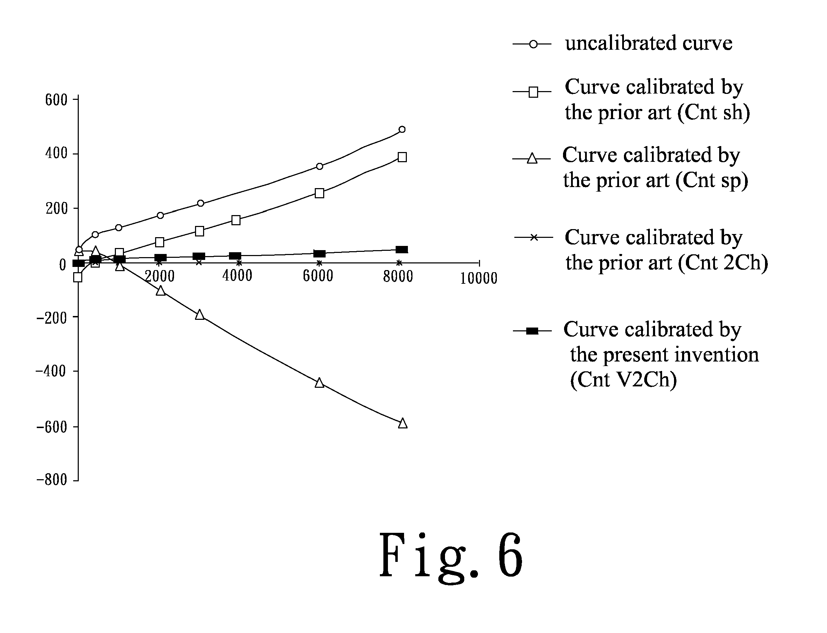

Refer to Fig.6 for the concentration-error relationships of the prior arts and the present invention. Fig.6 shows that the accuracy of the method of the present invention is slightly lower than that of the conventional dual-channel infrared carbon dioxide measurement method. However, the present invention can almost approach the accuracy of the conventional dual-channel method. Therefore, the present invention can solve the problems of complicated structure and high price of the conventional dual-channel infrared carbon dioxide measurement device. In other words, the present invention adopts a simple single-channel infrared measurement structure and performs the calibration of a measured voltage value with the reference voltage value to economically overcome the infrared signal drift caused by long-term usage. Thus, the present invention is less expensive and suitable for homes, office buildings, schools and shops. Further, the present invention has a wide detection range. Therefore, the present invention has considerable commercial potential. In a conventional single-channel carbon dioxide zero shift concentration calibration method (Cnt Sh), 103 ppm is subtracted from the detected carbon dioxide concentration. In a conventional single-channel carbon dioxide concentration span calibration method (Cnt Sp), the detected carbon dioxide concentration is divided by 113%. The two conventional calibration methods cannot accurately measure gas concentration because the post-calibration error increases with usage time and gas concentration. The prior arts are hard to overcome infrared signal drift and thus have poor accuracy and inferior reliability in gas concentration measurement. The present invention can solve the abovementioned problems.

The embodiments described above are only to demonstrate the technical contents and characteristics of the present invention to enable the persons skilled in the art to understand, make, and use the present invention. However, it is not intended to limit the scope of the present invention. Any equivalent modification or variation according to the spirit of the present invention is to be also included within the scope of the present invention.

**Claims**

1. A gas concentration measurement device comprising
   a single-channel infrared gas detection module detecting a voltage signal of a gas sample;
   a converter converting said voltage signal into an infrared signal value; and
   a processing module using a reference infrared signal value to calibrate said infrared signal value to generate a gas concentration of said gas sample.

**2.** The gas concentration measurement device according to claim 1, wherein said single-channel infrared gas detection module further comprises a gas tube, an infrared emitter and an infrared detector, wherein said infrared emitter and said infrared detector are respectively arranged on two ends of said gas tube, and wherein an infrared light emitted by said infrared emitter passes through said gas tube and reaches said infrared detector, and wherein said infrared detector generates said voltage signal according to intensity of said infrared light.

**3.** The gas concentration measurement device according to claim 2, wherein said infrared emitter is the infrared lamp, said infrared detector is a thermopile infrared sensor, said concentration of said gas sample is a concentration of carbon dioxide.

**4.** The gas concentration measurement device according to claim 1, wherein said reference infrared signal value is an updated digital value detected by said single-channel infrared gas detection module this reference infrared signal value is updated at night, and said digital value is not gas concentration value yet.

**5.** The gas concentration measurement device according to claim 1, wherein said reference infrared signal value is an updated said digital value detected by pumping one standard $CO_2$ gas into the gas tube of said single-channel infrared gas detection module ,and said digital value is not gas concentration value yet.

**6.** The gas concentration measurement device according to claim 1, wherein said reference infrared value is a digital value updated by said single-channel infrared gas detection module according to environments.

**7.** The gas concentration measurement device according to claim 1, wherein said reference infrared signal value is an initial reference digital value gotten by pumping the standard gas into the device , and wherein said processing module calibrates concentration drift of said gas sample with said initial reference infrared signal value.

**8.** The gas concentration measurement device according to claim 1,wherein the infrared signal value from the gas thermopile is calibrated by dividing one updated reference signal value to compensate the gas concentration drift, this reference signal value is not gas concentration yet.

**9.** The gas concentration measurement device according to claim 1 further comprising a display device coupled to said processing module and presenting said concentration, and said converter is an analog-to-digital converter.

**10.** The gas concentration measurement device according to claim 1 further comprising an amplifier, wherein one terminal of said amplifier is coupled to said single-channel infrared gas detection module, and another terminal of said amplifier is coupled to said converter, and wherein said amplifier amplifies said voltage signal into an amplified voltage signal and transmits said amplified voltage signal to said converter, and wherein said converter converts said amplified voltage signal into said infrared signal value.

**11.** A gas concentration measurement method comprising steps:

using a single-channel infrared gas detection module to detect a voltage signal of a gas sample;
converting said voltage signal into an infrared signal value; and
using a reference infrared signal value to calibrate said infrared signal value to generate a gas concentration of said gas sample.

**12.** The gas concentration measurement method according to claim 11 further comprising a step of setting an initial value for said reference infrared signal value before detecting said gas concentration in said gas sample, wherein said reference infrared signal value is a digital value gotten by pumped one kind of standard gas into the gas tube.

**13.** The gas concentration measurement method according to claim 11, wherein said reference infrared signal value is updated by gas diffusion at night or by pumping one standard gas into the gas tube of said single-channel infrared gas detection module, this updated digital value is not gas concentration value yet.

**14.** The gas concentration measurement method according to claim 11, wherein said voltage signal is converted into said infrared signal value by an analog-to-digital converter, said infrared signal is not gas concentration value yet, said concentration of said gas sample is a concentration of carbon dioxide.

**15.** The gas concentration measurement method according to claim 11,wherein the infrared signal value from the gas thermopile is calibrated by dividing updated one reference signal value to compensate the gas concentration drift, said reference signal value is not gas concentration yet.

Fig.1(prior art )

21

213

214

212

27

211

converter
25

processing
module
23

display
device
26

infrared
controler
22

24

Fig. 2

EP 2 293 043 A2

```
                                                              ┌─ S31
┌──────────────────────────────┐
│ using a single-channel infrared │
│ gas detection module to detect a │─────────────┐
│ voltage  signal of a gas sample │              │           ┌─ S34
└──────────────────────────────┘              │
              │                                │
              │                   ┌─ S32        ▼
              ▼              ┌─────────────────────────────┐
┌──────────────────────────────┐        │                             │
│ converting the  voltage  signal │        │ updating the reference       │
│ into an infrared signal  value   │        │ infrared signal value        │
└──────────────────────────────┘        │                             │
              │                          └─────────────────────────────┘
              │                   ┌─ S33               │
              ▼                                         │
┌──────────────────────────────┐                     │
│ using a reference infrared signal │                     │
│ value to calibrate the infrared  │◄────────────────────┘
│ signal  value to generate a      │
│ concentration of the  gas sample │
└──────────────────────────────┘
```

# Fig. 3

Fig. 4

standard curve

uncalibrated curve

calibrated curve

(ppm)

(Vsez)

Fig. 5

Fig. 6

EP 2 293 043 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5347474 A

- US 6114700 A